# EUROPEAN PATENT APPLICATION

(11) **EP 4 838 669 A1**
(43) Date of publication of application: **11.11.2026**
(21) Application number: 25809106.5
(22) Date of filing: 25.04.2025
(51) Int. Cl.: H01M 50/40, H01M 50/449

(54) **COMPOSITE SEPARATOR FOR LITHIUM METAL BATTERY, PREPARATION METHOD FOR COMPOSITE SEPARATOR, AND LITHIUM METAL BATTERY**

(30) Priority: 09.05.2024 CN 202410569744
(71) Applicant: Shanghai Xuanyi New Energy Development Co., Ltd, Shanghai 201806 (CN)
(72) Inventor: WANG, Jinguang, Shanghai 201806 (CN); LUO, Xianjia, Shanghai 201806 (CN); WEN, Qian, Shanghai 201806 (CN); WANG, Junye, Shanghai 201806 (CN); JIANG, Ru, Shanghai 201806 (CN); ZHANG, Ya, Shanghai 201806 (CN); CHENG, Qian, Shanghai 201806 (CN)
(74) Representative: Dehns Germany Partnerschaft mbB
(86) International application number: PCT/CN2025/091341
(87) International publication number: WO 2025/232593

(57) **Abstract**

Provided is a composite separator for a lithium metal battery, a preparation method thereof, and a lithium metal battery. The composite separator for a lithium metal battery includes a separator layer and an NF@MOF membrane layer, where the NF@MOF membrane layer is an NF membrane on which an MOF material is grown in situ. In the present disclosure, the separator layer is composited with the NF@MOF membrane layer, and the in-situ grown MOF material provides high ionic conductivity and low interfacial impedance, such that the prepared composite separator possesses high mechanical strength, high flexibility, high electrolyte wettability, a high electrolyte retention rate, and excellent ionic conductivity. The synergistic effect exerted by various components of the composite separator can promote uniform deposition and stripping of lithium metal, inhibit growth of lithium dendrites, prevent separator puncture that may lead to a short circuit or even fire or explosion accidents, improve cycle life and safety performance of the lithium metal battery, and make the composite separator according to the present disclosure have broad application prospects in terms of the lithium metal battery.

## Description

### Cross-Reference to Related Application

The present disclosure is based upon and claims priority to Chinese Application No. CN 202410569744.9 filed on May 9, 2024, the disclosure of which is hereby incorporated by reference again in its entirety.

### Technical Field

The present disclosure relates to the technical field of lithium batteries, and in particular, to a composite separator for a lithium metal battery, a preparation method thereof, and a lithium metal battery.

### Background

With the vigorous development of lithium-ion battery technology, lithium batteries have been applied to various aspects of social life. Since the capacity of current lithium batteries is already close to the theoretical capacity limit (372 mAh/g) of traditional graphite negative electrodes, there is an urgent need to develop a negative electrode material with high theoretical capacity to meet increasingly demanding market needs. Among them, directly using pure lithium metal as a battery negative electrode material is considered the holy grail in the development of lithium-ion batteries. The lithium metal negative electrode has an ultra-high theoretical capacity value (3860 mAh/g) and the lowest electrochemical potential (-3.04 V vs. standard hydrogen electrode). After being matched with currently mature positive electrode materials, the energy density of the battery can easily reach more than 400 Wh/kg.

However, lithium metal negative electrode batteries still suffer from severe lithium dendrite growth during actual use, which can lead to battery short circuits or even explosion accidents, resulting in poor safety of lithium metal batteries. However, current conventional commercial polypropylene/polyethylene separator products do not have the ability to resist puncture by the lithium dendrites.

### Summary

Based on this, aiming at the technical problem that current conventional commercial separator products do not have the ability to resist puncture by lithium dendrites, an objective of the present disclosure is to provide a composite separator for a lithium metal battery, a preparation method thereof, and a lithium metal battery. The composite separator for a lithium metal battery can regulate uniform diffusion and deposition of lithium metal, has higher ionic conductivity and electrolyte retention amount, and has good mechanical strength and flexibility, thereby achieving the effect of inhibiting growth of the lithium dendrites, and improving cycle life and safety of the lithium metal battery.

To achieve the above objective, the present disclosure adopts the following technical solutions.

The present disclosure provides a composite separator for a lithium metal battery, which includes a separator layer and an NF@MOF membrane layer, where the NF@MOF membrane layer is an NF membrane with an in-situ grown MOF material.

In the present disclosure, the separator layer is composited with the NF@MOF membrane layer, and the in-situ grown MOF material provides high ionic conductivity and low interfacial impedance, such that the prepared composite separator possesses high mechanical strength, high flexibility, high electrolyte wettability, a high electrolyte retention rate, and excellent ionic conductivity. The synergistic effect exerted by various components of the composite separator can promote uniform deposition and stripping of lithium metal, inhibit growth of lithium dendrites, prevent separator puncture that may lead to a short circuit or even fire or explosion accidents, improve cycle life and safety performance of the lithium metal battery, and make the composite separator according to the present disclosure have broad application prospects in terms of the lithium metal battery.

As a further improvement of the above solution of the present disclosure, the separator layer is a polypropylene separator or a polyethylene separator; and/or, the NF membrane is composed of polymer fibers, the MOF material is distributed on surfaces of the polymer fibers, and the MOF material is connected to the polymer fibers through van der Waals forces and/or hydrogen bonds.

Further, a diameter of the polymer fibers is 100~1000 nm; and/or, a thickness of the NF membrane is 10~50 µm; and/or, a porosity of the NF membrane is 55%~85%; and/or, a number average molecular weight of a material of the polymer fibers is 10⁴~10⁷ g/mol; and/or, the material of the polymer fibers is at least one from polyacrylonitrile, polyvinylidene fluoride, vinylidene fluoride-hexafluoropropylene copolymer, polyimide, and polyvinyl alcohol; and/or, the MOF material is at least one from ZIF-8, ZIF-67, MOF-5, and HKUST-1.

Further, a mass ratio of the MOF material to the NF membrane is (0.1~10):(90.0~99.9).

The present disclosure provides a preparation method for the aforementioned composite separator for a lithium metal battery, including the following steps.

S1: dissolving a polymer in an organic solvent to obtain a spinning solution, and performing electrospinning on the spinning solution to obtain an NF membrane.

S2: preparing a growth solution of an MOF material, immersing the NF membrane in the growth solution, then taking out the NF membrane, removing excess growth solution and drying to obtain an NF@MOF membrane.

S3: roll-pressing and compositing the NF@MOF membrane with a separator layer to obtain the composite separator for a lithium metal battery.

As a further improvement of the above solution of the present disclosure, in S1, a number average molecular weight of the polymer is 10⁴~10⁷ g/mol; and/or, the polymer is at least one from polyacrylonitrile (PAN), polyvinylidene fluoride (PVDF), vinylidene fluoride-hexafluoropropylene copolymer (PVDF-HFP), polyimide (PI), and polyvinyl alcohol (PVA); and/or,
in S1, the organic solvent is at least one from N,N-dimethylformamide (DMF), N-methylpyrrolidone (NMP), and dimethyl sulfoxide (DMSO).

As a further improvement of the above solution of the present disclosure, in S1, a mass fraction of the spinning solution is 0.5%~25%.

As a further improvement of the above solution of the present disclosure, in S1, process parameters of the electrospinning are: a distance between a spinneret and a receiver is 10~30 cm, an electrospinning voltage is 10~40 KV, an electrospinning time is 4~20 h, an electrospinning environment temperature is 20 °C~30 °C, and a humidity is 40%~70%.

As a further improvement of the above solution of the present disclosure, in S1, a thickness of the NF membrane is 10~50 µm, a porosity is 55%~85%, and a diameter of polymer fibers is 100~1000 nm.

As a further improvement of the above solution of the present disclosure, in S2, the MOF material is at least one from ZIF-8, ZIF-67, MOF-5, and HKUST-1.

And/or, in S2, the NF membrane is immersed in the growth solution for 3~24 h, a temperature of the growth solution is 20 °C~200 °C, and the drying is performed in a vacuum oven at 50 °C~100 °C.

As a further improvement of the above solution of the present disclosure, in S3, the roll-pressing and compositing is hot roll-pressing and compositing utilizing a hot roller at a temperature of 40 °C~80 °C.

The present disclosure provides a lithium metal battery, which includes a lithium negative electrode, a separator, and a positive electrode, where the separator is the aforementioned composite separator for a lithium metal battery or prepared by adopting the preparation method for the aforementioned composite separator for a lithium metal battery.

Compared with the related art, the present disclosure has the following beneficial effects.
1. The composite separator for a lithium metal battery proposed by the present disclosure includes a separator layer and an NF@MOF membrane layer, where a polyethylene/polypropylene separator has higher mechanical strength and flexibility, but electrolyte wettability and an electrolyte retention rate thereof are general. A fiber membrane material of the NF@MOF membrane layer is formed by interlacing and stacking fibers, and its own tensile strength is relatively low, but its ultra-high porosity can maintain sufficient electrolyte, and uniformly arranged metal cations in the structure of the in-situ grown MOF material can promote rapid passage of Li⁺ under the principle of repulsion between like charges, inhibit reduction of Li⁺ nearby to generate lithium metal, which would otherwise lead to uneven growth into lithium dendrites. In the present disclosure, the separator layer is composited with the NF@MOF membrane layer, and the in-situ grown MOF material provides high ionic conductivity and low interfacial impedance, such that the prepared composite separator possesses high mechanical strength, high flexibility, high electrolyte wettability, a high electrolyte retention rate, and excellent ionic conductivity. The synergistic effect exerted by various components of the composite separator can promote uniform deposition and stripping of lithium metal, inhibit growth of the lithium dendrites, prevent separator puncture that may lead to a short circuit or even fire or explosion accidents, improve cycle life and safety performance of the lithium metal battery, and make the composite separator according to the present disclosure have broad application prospects in terms of the lithium metal battery.
2. In the present disclosure, a polymer solution is made into a nanofiber membrane with a certain thickness through electrospinning technology, then a metal organic framework material is in-situ grown on the nanofiber membrane to obtain the NF@MOF membrane, and finally the NF@MOF membrane and a base separator are pressed together through a hot roller to obtain the composite separator, which has a simple and easily operable preparation process.

### Brief Description of the Drawings

The accompanying drawings, which constitute a part of the present disclosure, are used to provide a further understanding of the present disclosure. The illustrative embodiments of the present disclosure and descriptions thereof are used to explain the present disclosure and do not constitute an improper limitation of the present disclosure. In the drawings:
Fig. 1 is an SEM image of a PVDF-HFP nanofiber membrane prepared in Embodiment 1 of the present disclosure.
Fig. 2 is an SEM image of the PVDF-HFP nanofiber membrane prepared in Embodiment 1 of the present disclosure after in-situ growth of ZIF-8.
Fig. 3 is a schematic diagram showing assembly of a lithium metal battery in the embodiments of the present disclosure.
Fig. 4 is a comparison chart of performance test results of Embodiments 1 to 3 and Comparative Examples 1 to 2 of the present disclosure.

The above drawings include the following reference signs:
100: Positive electrode; 200: Li negative electrode; and 300: Composite separator.

### Detailed Description of the Embodiments

To facilitate understanding of the present disclosure, the present disclosure will be described more comprehensively below with reference to specific embodiments. However, the present disclosure may be implemented in many different forms and is not limited to the embodiments described herein. On the contrary, these embodiments are provided to make the understanding of the disclosed content of the present disclosure more thorough and comprehensive.

It should be noted that, in the present disclosure, an NF membrane is an abbreviation for a nanofiber membrane, which is formed by interlacing and stacking fibers.

Unless otherwise defined, all technical and scientific terms used herein have the same meaning as commonly understood by those skilled in the art to which the present disclosure belongs. The terms used in the description of the present disclosure herein are only for the purpose of describing specific implementations, and are not intended to limit the present disclosure.

As analyzed in the Background of the present disclosure, current conventional commercial separator products do not have the ability to resist puncture by lithium dendrites. To solve this problem, the present disclosure provides a composite separator for a lithium metal battery, a preparation method thereof, and a lithium metal battery.

In a typical implementation of the present disclosure, a composite separator for a lithium metal battery is provided, which includes a separator layer and an NF@MOF membrane layer, where the NF@MOF membrane layer is an NF membrane with an in-situ grown MOF material.

The separator layer has higher mechanical strength and flexibility, but electrolyte wettability and an electrolyte retention rate thereof are general. A fiber membrane material of the NF@MOF membrane layer is formed by interlacing and stacking fibers, and its own tensile strength is relatively low, but its ultra-high porosity can maintain sufficient electrolyte, and uniformly arranged metal cations in the structure of the in-situ grown MOF material can promote rapid passage of Li⁺ under the principle of repulsion between like charges, inhibit reduction of Li⁺ nearby to generate lithium metal, which would otherwise lead to uneven growth into lithium dendrites. In the present disclosure, the separator layer is composited with the NF@MOF membrane layer, and the in-situ grown MOF material provides high ionic conductivity and low interfacial impedance, such that the prepared composite separator possesses high mechanical strength, high flexibility, high electrolyte wettability, a high electrolyte retention rate, and excellent ionic conductivity. The synergistic effect exerted by various components of the composite separator can promote uniform deposition and stripping of lithium metal, inhibit growth of the lithium dendrites, prevent separator puncture that may lead to a short circuit or even fire or explosion accidents, improve cycle life and safety performance of the lithium metal battery, and make the composite separator according to the present disclosure have broad application prospects in terms of the lithium metal battery.

The separator layer and the NF@MOF membrane layer are laminated and composited, which may specifically be roll-pressing and compositing of the two.

In an embodiment of the present disclosure, the separator layer is a polypropylene separator or a polyethylene separator; and/or, the NF membrane is composed of polymer fibers, the MOF material is distributed on surfaces of the polymer fibers, and the MOF material is connected to the polymer fibers through van der Waals forces and/or hydrogen bonds.

A polyethylene/polypropylene separator has higher mechanical strength and flexibility. The NF membrane is composed of the polymer fibers, and has an ultra-high porosity that can maintain sufficient electrolyte. The MOF material is connected to the polymer fibers through van der Waals forces and/or hydrogen bonds, and are distributed on the surfaces of the polymer fibers, which helps promote rapid passage of Li⁺, inhibit reduction of Li⁺ nearby to generate lithium metal, which would otherwise lead to uneven growth into the lithium dendrites.

In an embodiment of the present disclosure, a diameter of the polymer fibers is 100~1000 nm; and/or, a thickness of the NF membrane is 10~50 µm; and/or, a porosity of the NF membrane is 55%~85%; and/or, a number average molecular weight of a material of the polymer fibers is 10⁴~10⁷ g/mol; and/or, the material of the polymer fibers is at least one from polyacrylonitrile (PAN), polyvinylidene fluoride (PVDF), vinylidene fluoride-hexafluoropropylene copolymer (PVDF-HFP), polyimide (PI), and polyvinyl alcohol (PVA); and/or, the MOF material is at least one from ZIF-8, ZIF-67, MOF-5, and HKUST-1.

Controlling the diameter of the polymer fibers within the above range helps improve the porosity and specific surface area of the NF membrane, thereby helping improve wettability and electrolyte retention capacity of the electrolyte, further helping improve transport efficiency of lithium ions, and reducing formation of dendrites. Controlling the thickness of the NF membrane within the above range helps balance mechanical strength of the composite separator and transport efficiency of lithium ions. The NF membrane having the above porosity helps further improve the electrolyte retention rate of the composite separator and provide sufficient ion conduction paths. Meanwhile, the high porosity facilitates uniform distribution of lithium ions, reduces the possibility of dendrite growth, thereby helping improve safety and cycle performance of the battery. Controlling the number average molecular weight of the material of the polymer fibers within the above range helps, on one hand, optimize formability of fibers, improve uniformity of fiber diameters, structural stability and toughness of the separator, thereby helping reduce the risk of internal short circuits in the battery; on the other hand, it facilitates uniform growth of the MOF material, thereby helping improve interfacial stability of the separator, further helping improve uniform deposition of lithium ions and cycle performance of the battery. Controlling the type of the material of the polymer fibers within the above range helps improve electrolyte wettability and structural stability of the composite separator. Controlling the type of the MOF material within the above range helps, on one hand, improve ionic conductivity of the composite separator and reduce transport resistance of lithium ions in the separator; on the other hand, it helps promote uniform deposition of lithium ions and inhibit growth of dendrites, thereby helping further improve cycle stability and safety of the battery.

In an embodiment of the present disclosure, a mass ratio of the MOF material to the NF membrane is (0.1~10):(90.0~99.9).

Controlling the mass ratio of the MOF material to the NF membrane within the above range helps, on one hand, the composite separator obtain better electrolyte wettability and retain more electrolyte, thereby enhancing the electrolyte retention capacity of the separator and cycle stability of the battery; on the other hand, it helps promote uniform deposition and stripping of Li⁺ ions, thereby helping inhibit formation of the lithium dendrites.

In another typical embodiment of the present disclosure, a preparation method for the aforementioned composite separator for a lithium metal battery is provided, including the following steps: S1: a polymer is dissolved in an organic solvent to obtain a spinning solution, and electrospinning is performed on the spinning solution to obtain an NF membrane; S2: a growth solution of an MOF material is prepared, the NF membrane is immersed in the growth solution, then the NF membrane is taken out, excess growth solution is removed and drying is performed to obtain an NF@MOF membrane; and S3: the NF@MOF membrane and a separator layer are roll-pressed and composited to obtain the composite separator for a lithium metal battery.

The composite separator for a lithium metal battery prepared by adopting the above method can effectively inhibit growth of the lithium dendrites, prevent internal short circuits of the battery, and improve safety of the battery. Meanwhile, it has excellent ionic conductivity and electrolyte retention capacity, as well as good mechanical properties, which helps improve cycle stability of the battery. The entire preparation process is relatively simple and easy for large-scale production, which helps reduce manufacturing costs of the composite separator and facilitates its commercial application.

In an embodiment of the present disclosure, in S1, a number average molecular weight of the polymer is 10⁴~10⁷ g/mol; and/or, the polymer is at least one from polyacrylonitrile (PAN), polyvinylidene fluoride (PVDF), vinylidene fluoride-hexafluoropropylene copolymer (PVDF-HFP), polyimide (PI), and polyvinyl alcohol (PVA); and/or, in S1, the organic solvent is at least one from N,N-dimethylformamide (DMF), N-methylpyrrolidone (NMP), and dimethyl sulfoxide (DMSO).

Controlling the number average molecular weight of the polymer within the above range helps, on one hand, optimize formability of fibers, improve uniformity of fiber diameters, structural stability and toughness of the separator, thereby helping reduce the risk of internal short circuits in the battery; on the other hand, it facilitates uniform growth of the MOF material, thereby helping improve interfacial stability of the separator, further helping improve uniform deposition of lithium ions and cycle performance of the battery. Controlling the type of the polymer within the above range helps improve electrolyte wettability and structural stability of the composite separator. Controlling the type of the organic solvent within the above range helps improve solubility of the polymer and form a spinning solution with higher uniformity, thereby helping further improve uniformity of diameter distribution of the polymer fibers, further helping improve electrolyte wettability and structural stability of the composite separator.

In an embodiment of the present disclosure, in S1, a mass fraction of the spinning solution is 0.5%~25%.

Controlling the mass fraction of the spinning solution within the above range helps control the diameter of the polymer fibers within a suitable range, and helps improve uniformity of diameter distribution of the polymer fibers, thereby helping rapid transport of lithium ions and sufficient wetting of the electrolyte, further helping improve ionic conductivity and electrolyte retention capacity of the composite separator.

In order to improve stability and uniformity of diameter distribution of the polymer fibers, thereby improving wettability and electrolyte retention capacity of the composite separator for the electrolyte, in an embodiment of the present disclosure, in S1, process parameters of the electrospinning are: a distance between a spinneret and a receiver is 10~30 cm, an electrospinning voltage is 10~40 KV, an electrospinning time is 4~20 h, an electrospinning environment temperature is 20 °C~30 °C, and a humidity is 40%~70%.

In an embodiment of the present disclosure, in S1, a thickness of the NF membrane is 10~50 µm, a porosity is 55%~85%, and a diameter of the polymer fibers is 100~1000 nm.

Controlling the thickness of the NF membrane within the above range helps balance mechanical strength of the composite separator and transport efficiency of lithium ions. The NF membrane having the above porosity helps further improve the electrolyte retention rate of the composite separator and provide sufficient ion conduction paths. Meanwhile, the high porosity facilitates uniform distribution of lithium ions, reduces the possibility of dendrite growth, thereby helping improve safety and cycle performance of the battery. Controlling the diameter of the polymer fibers within the above range helps improve the porosity and specific surface area of the NF membrane, thereby helping improve wettability and electrolyte retention capacity of the electrolyte, further helping improve transport efficiency of lithium ions, and reducing formation of dendrites.

In an embodiment of the present disclosure, in S2, the MOF material is at least one from ZIF-8, ZIF-67, MOF-5, and HKUST-1; and/or, in S2, the NF membrane is immersed in the growth solution for 3~24 h, a temperature of the growth solution is 20 °C~200 °C, and the drying is performed in a vacuum oven at 50 °C~100 °C.

Controlling the type of the MOF material within the above range helps, on one hand, improve ionic conductivity of the composite separator and reduce transport resistance of lithium ions in the separator; on the other hand, it helps promote uniform deposition of lithium ions and inhibit growth of dendrites, thereby helping further improve cycle stability and safety of the battery. Controlling the time of immersing the NF membrane in the growth solution within the above range helps control the amount of the MOF material grown on the NF membrane. On one hand, it helps the composite separator obtain better electrolyte wettability and retain more electrolyte, thereby enhancing the electrolyte retention capacity of the separator and cycle stability of the battery; on the other hand, it helps promote uniform deposition and stripping of Li⁺ ions, thereby helping inhibit formation of the lithium dendrites. Controlling the temperature of the growth solution within the above range helps improve the efficiency of growing the MOF materials on the NF membrane without destroying the structure of the NF membrane.

In order to improve binding force between the NF@MOF membrane layer and the separator layer without destroying the structure of the NF@MOF membrane layer, in an embodiment of the present disclosure, in S3, the roll-pressing and compositing is hot roll-pressing and compositing utilizing a hot roller at a temperature of 40 °C~80 °C.

In yet another typical implementation of the present disclosure, a lithium metal battery is provided, which includes a lithium negative electrode, a separator, and a positive electrode, where the separator is the aforementioned composite separator for a lithium metal battery or prepared by using the preparation method for the aforementioned composite separator for a lithium metal battery.

Since the lithium metal battery contains the composite separator for a lithium metal battery of the present disclosure, the lithium metal battery has higher rate performance, cycle stability, and safety.

The beneficial effects of the present disclosure will be further illustrated below in conjunction with embodiments.

### Embodiment 1

This embodiment provides a composite separator for a lithium metal battery, and preparation method thereof includes the following steps.

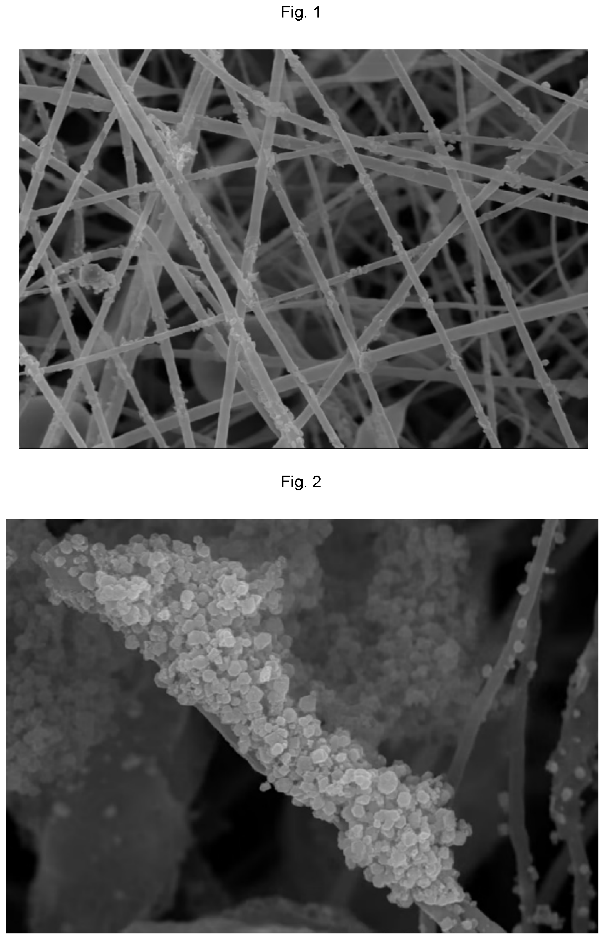

S1: PVDF-HFP (having a number average molecular weight of 4×10⁵ g/mol) was added to DMF, and the PVDF-HFP was completely and uniformly dissolved through magnetic stirring to obtain a DMF spinning solution of PVDF-HFP, where a mass fraction of the polymer PVDF-HFP was 10%. Then, electrospinning was performed on the DMF spinning solution of PVDF-HFP, where an electrospinning voltage was 17 kV, a receiving distance was 15 cm, and an electrospinning time was 8 hours, so as to obtain a PVDF-HFP nanofiber membrane, and the prepared PVDF-HFP nanofiber membrane was placed in a vacuum oven at 60 °C for drying for later use. An SEM image of the prepared PVDF-HFP nanofiber membrane was shown in Fig. 1, where a thickness of the PVDF-HFP nanofiber membrane was 20 µm, a porosity was 65%, and a diameter of polymer fibers was 900 nm.

S2: a growth solution of ZIF-8 was prepared: 0.01 mol of zinc nitrate hexahydrate was added to 150 mL of methanol and stirred by a magnetic stirrer for 10 minutes to obtain a growth solution a. Then, 0.04 mol of 2-methylimidazole was added to 150 mL of methanol and stirred by using a magnetic stirrer for 30 minutes to obtain a growth solution b. First, the dried PVDF-HFP nanofiber membrane was completely immersed in the growth solution a and sealed to stand for 3 hours, then the growth solution b was completely poured into the growth solution a, and the mixed solution was allowed to stand at room temperature for 6 hours until a ZIF-8 material was uniformly grown and coated on surfaces of the PVDF-HFP nanofibers. After the reaction was completed, the PVDF-HFP nanofiber membrane was carefully taken out, drained of excess growth solution, and placed in a vacuum oven at 60 °C for drying to obtain a PVDF-HFP@ZIF-8 membrane, where a mass ratio of ZIF-8 to the PVDF-HFP nanofiber membrane was 5:95. An SEM image of the prepared PVDF-HFP nanofiber membrane after in-situ growth of ZIF-8 was shown in Fig. 2.

S3: the PVDF-HFP@ZIF-8 membrane obtained in S2 and a PP separator were hot-pressed and composited together through hot roll-pressing treatment at a hot roll-pressing temperature of 70 °C. During the hot roll-pressing, a gap between two rollers was equal to a sum of initial thicknesses of a Celgard2500 separator and the PVDF-HFP@ZIF-8 composite fiber membrane minus 3 µm, thereby obtaining a composite separator material PP@PVDF-HFP@ZIF-8 for the lithium metal battery.

The PP separator adopted in this embodiment was a commercial separator with a model number of Celgard2500.

### Embodiment 2

This embodiment provides a composite separator for a lithium metal battery, and preparation method thereof includes the following steps.

S1: PVDF-HFP (having a number average molecular weight of 4×10⁵ g/mol) was added to DMF, and the PVDF-HFP was completely and uniformly dissolved through magnetic stirring to obtain a DMF spinning solution of PVDF-HFP, where a mass fraction of the polymer PVDF-HFP was 10%. Then, electrospinning was performed on the DMF spinning solution of PVDF-HFP, where an electrospinning voltage was 17 kV, a receiving distance was 15 cm, and an electrospinning time was 8 hours, so as to obtain a PVDF-HFP nanofiber membrane, and the PVDF-HFP nanofiber membrane was placed in a vacuum oven at 60 °C for drying for later use, where a thickness of the PVDF-HFP nanofiber membrane was 20 µm, a porosity was 65%, and a diameter of polymer fibers was 900 nm.

S2: a growth solution of MOF-5 was prepared: 0.008 mol of zinc nitrate hexahydrate and 0.004 mol of terephthalic acid were added to 100 mL of N,N-dimethylformamide (DMF) and ultrasonicated to be completely dissolved to obtain the growth solution of MOF-5. The dried PVDF-HFP nanofiber membrane was completely immersed in the growth solution of MOF-5 and sealed to stand for 3 hours, then 4 mL of triethylamine (TEA) was added dropwise into the mixed solution and magnetically stirred for 5 minutes, and the mixture was allowed to stand at room temperature for 6 hours until a MOF-5 material was uniformly grown and coated on surfaces of the PVDF-HFP nanofibers. After the reaction was completed, the PVDF-HFP nanofiber membrane was carefully taken out, drained of excess growth solution, and placed in a vacuum oven at 60 °C for drying to obtain a PVDF-HFP@MOF-5 membrane, where a mass ratio of MOF-5 to the PVDF-HFP nanofiber membrane was 5:95.

S3: the PVDF-HFP@MOF-5 membrane obtained in S2 and a PP separator were hot-pressed and composited together through hot roll-pressing treatment at a hot roll-pressing temperature of 70 °C. During the hot roll-pressing, a gap between two rollers was equal to a sum of initial thicknesses of the PP separator and the PVDF-HFP@MOF-5 composite fiber membrane minus 3 µm, thereby obtaining a composite separator material PP@PVDF-HFP@MOF-5 for the lithium metal battery.

The PP separator adopted in this embodiment was a commercial separator with a model number of Celgard2500.

### Embodiment 3

This embodiment provides a composite separator for a lithium metal battery, and preparation method thereof includes the following steps.

S1: PVDF-HFP (having a number average molecular weight of 4×10⁵ g/mol) was added to DMF, and the PVDF-HFP was completely and uniformly dissolved through magnetic stirring to obtain a DMF spinning solution of PVDF-HFP, where a mass fraction of the polymer PVDF-HFP was 10%. Then, electrospinning was performed on the DMF spinning solution of PVDF-HFP, where an electrospinning voltage was 17 kV, a receiving distance was 15 cm, and an electrospinning time was 8 hours, so as to obtain a PVDF-HFP nanofiber membrane, and the PVDF-HFP nanofiber membrane was placed in a vacuum oven at 60 °C for drying for later use, where a thickness of the PVDF-HFP nanofiber membrane was 20 µm, a porosity was 65%, and a diameter of polymer fibers was 900 nm.

S2: a growth solution of HKUST-1 was prepared: 0.01 mol of copper nitrate trihydrate was completely dissolved in 50 mL of absolute ethanol to obtain a growth solution c. Then, 0.006 mol of 1,3,5-benzenetricarboxylic acid was completely dissolved in 50 mL of absolute ethanol to obtain a growth solution d. First, the dried PVDF-HFP nanofiber membrane was completely immersed in the growth solution c of HKUST-1 and sealed to stand for 3 hours, then the growth solution d was poured into the growth solution c and uniformly stirred, subsequently the PVDF-HFP nanofiber membrane and the mixed solution were transferred together into a reaction kettle, and a standing reaction was carried out at a temperature of 80 °C for 10 hours until an HKUST-1 material was uniformly grown and coated on surfaces of the PVDF-HFP nanofibers. After the reaction was completed, the PVDF-HFP nanofiber membrane was carefully taken out, drained of excess growth solution, and placed in a vacuum oven at 60 °C for drying to obtain a PVDF-HFP@HKUST-1 membrane, where a mass ratio of HKUST-1 to the PVDF-HFP nanofiber membrane was 5:95.

S3: the PVDF-HFP@HKUST-1 membrane obtained in S2 and a PP separator were hot-pressed and composited together through hot roll-pressing treatment at a hot roll-pressing temperature of 70 °C. During the hot roll-pressing, a gap between two rollers was equal to a sum of initial thicknesses of the PP separator and the PVDF-HFP@HKUST-1 composite fiber membrane minus 3 µm, thereby obtaining a composite separator material PP@PVDF-HFP@HKUST-1 for the lithium metal battery.

The PP separator adopted in this embodiment was a commercial separator with a model number of Celgard2500.

### Embodiment 4

The difference from Embodiment 2 lies in that, in S2, a growth solution of MOF-5 was prepared: 0.004 mol of zinc nitrate hexahydrate and 0.002 mol of terephthalic acid were added to 100 mL of N,N-dimethylformamide (DMF) and ultrasonicated to be completely dissolved to obtain the growth solution of MOF-5. The dried PVDF-HFP nanofiber membrane was completely immersed in the growth solution of MOF-5 and sealed to stand for 3 hours, then 4 mL of triethylamine (TEA) was added dropwise into the mixed solution and magnetically stirred for 5 minutes, and the mixture was allowed to stand at room temperature for 1 hours until a MOF-5 material was uniformly grown and coated on surfaces of the PVDF-HFP nanofibers. After the reaction was completed, the PVDF-HFP nanofiber membrane was carefully taken out, drained of excess growth solution, and placed in a vacuum oven at 60 °C for drying to obtain a PVDF-HFP@MOF-5 membrane, where a mass ratio of MOF-5 to the PVDF-HFP nanofiber membrane was 0.1:99.9, thereby finally obtaining a composite separator material PP@PVDF-HFP@MOF-5 for the lithium metal battery.

### Embodiment 5

The difference from Embodiment 2 lies in that, in S2, a growth solution of MOF-5 was prepared: 0.016 mol of zinc nitrate hexahydrate and 0.008 mol of terephthalic acid were added to 100 mL of N,N-dimethylformamide (DMF) and ultrasonicated to be completely dissolved to obtain the growth solution of MOF-5. The dried PVDF-HFP nanofiber membrane was completely immersed in the growth solution of MOF-5 and sealed to stand for 3 hours, then 4 mL of triethylamine (TEA) was added dropwise into the mixed solution and magnetically stirred for 5 minutes, and the mixture was allowed to stand at room temperature for 12 hours. After the reaction was completed, the PVDF-HFP nanofiber membrane was carefully taken out, drained of excess growth solution, and placed in a vacuum oven at 60 °C for drying to obtain a PVDF-HFP@MOF-5 membrane, where a mass ratio of MOF-5 to the PVDF-HFP nanofiber membrane was 10:90, thereby finally obtaining a composite separator material PP@PVDF-HFP@MOF-5 for the lithium metal battery.

### Embodiment 6

The difference from Embodiment 2 lies in that, in S2, a growth solution of MOF-5 was prepared: 0.024 mol of zinc nitrate hexahydrate and 0.012 mol of terephthalic acid were added to 100 mL of N,N-dimethylformamide (DMF) and ultrasonicated to be completely dissolved to obtain the growth solution of MOF-5. The dried PVDF-HFP nanofiber membrane was completely immersed in the growth solution of MOF-5 and sealed to stand for 3 hours, then 4 mL of triethylamine (TEA) was added dropwise into the mixed solution and magnetically stirred for 5 minutes, and the mixture was allowed to stand at room temperature for 24 hours. After the reaction was completed, the PVDF-HFP nanofiber membrane was carefully taken out, drained of excess growth solution, and placed in a vacuum oven at 60 °C for drying to obtain a PVDF-HFP@MOF-5 membrane, where a mass ratio of MOF-5 to the PVDF-HFP nanofiber membrane was 15:85, thereby finally obtaining a composite separator material PP@PVDF-HFP@MOF-5 for the lithium metal battery.

### Embodiment 7

The difference from Embodiment 2 lies in that, in S1: PVDF-HFP (having a number average molecular weight of 4×10⁵ g/mol) was added to DMF, and the PVDF-HFP was completely and uniformly dissolved through magnetic stirring to obtain a DMF spinning solution of PVDF-HFP, where a mass fraction of the polymer PVDF-HFP was 10%. Then, electrospinning was performed on the DMF spinning solution of PVDF-HFP, where an electrospinning voltage was 10 kV, a receiving distance was 15 cm, and an electrospinning time was 8 hours, so as to obtain a PVDF-HFP nanofiber membrane, where a porosity of the PVDF-HFP nanofiber membrane was 55%, and a diameter of polymer fibers was 1000 nm, thereby finally obtaining a composite separator material PP@PVDF-HFP@MOF-5 for the lithium metal battery.

### Embodiment 8

The difference from Embodiment 2 lies in that, in S1, PVDF-HFP (having a number average molecular weight of 4×10⁵ g/mol) was added to DMF, and the PVDF-HFP was completely and uniformly dissolved through magnetic stirring to obtain a DMF spinning solution of PVDF-HFP, where a mass fraction of the polymer PVDF-HFP was 10%. Then, electrospinning was performed on the DMF spinning solution of PVDF-HFP, where an electrospinning voltage was 40 kV, a receiving distance was 15 cm, and an electrospinning time was 8 hours, so as to obtain a PVDF-HFP nanofiber membrane, where a porosity of the PVDF-HFP nanofiber membrane was 85%, and a diameter of polymer fibers was 100 nm, thereby finally obtaining a composite separator material PP@PVDF-HFP@MOF-5 for the lithium metal battery.

### Embodiment 9

The difference from Embodiment 2 lies in that, in S1, PVDF-HFP (having a number average molecular weight of 4×10⁵ g/mol) was added to DMF, and the PVDF-HFP was completely and uniformly dissolved through magnetic stirring to obtain a DMF spinning solution of PVDF-HFP, where a mass fraction of the polymer PVDF-HFP was 10%. Then, electrospinning was performed on the DMF spinning solution of PVDF-HFP, where an electrospinning voltage was 7 kV, a receiving distance was 15 cm, and an electrospinning time was 8 hours, so as to obtain a PVDF-HFP nanofiber membrane, where a porosity of the PVDF-HFP nanofiber membrane was 50%, and a diameter of polymer fibers was 1500 nm, thereby finally obtaining a composite separator material PP@PVDF-HFP@MOF-5 for the lithium metal battery.

### Embodiment 10

The difference from Embodiment 2 lies in that, in S1, PVDF-HFP (having a number average molecular weight of 4×10⁵ g/mol) was added to DMF, and the PVDF-HFP was completely and uniformly dissolved through magnetic stirring to obtain a DMF spinning solution of PVDF-HFP, where a mass fraction of the polymer PVDF-HFP was 10%. Then, electrospinning was performed on the DMF spinning solution of PVDF-HFP, where an electrospinning voltage was 17 kV, a receiving distance was 15 cm, and an electrospinning time was 20 hours, so as to obtain a PVDF-HFP nanofiber membrane, where a thickness of the PVDF-HFP nanofiber membrane was 50 µm, thereby finally obtaining a composite separator material PP@PVDF-HFP@MOF-5 for the lithium metal battery.

### Embodiment 11

The difference from Embodiment 2 lies in that, in S1, PVDF-HFP (having a number average molecular weight of 4×10⁵ g/mol) was added to DMF, and the PVDF-HFP was completely and uniformly dissolved through magnetic stirring to obtain a DMF spinning solution of PVDF-HFP, where a mass fraction of the polymer PVDF-HFP was 10%. Then, electrospinning was performed on the DMF spinning solution of PVDF-HFP, where an electrospinning voltage was 17 kV, a receiving distance was 15 cm, and an electrospinning time was 4 hours, so as to obtain a PVDF-HFP nanofiber membrane, where a thickness of the PVDF-HFP nanofiber membrane was 10 µm, thereby finally obtaining a composite separator material PP@PVDF-HFP@MOF-5 for the lithium metal battery.

### Embodiment 12

The difference from Embodiment 2 lies in that, in S1, PVDF-HFP (having a number average molecular weight of 4×10⁵ g/mol) was added to DMF, and the PVDF-HFP was completely and uniformly dissolved through magnetic stirring to obtain a DMF spinning solution of PVDF-HFP, where a mass fraction of the polymer PVDF-HFP was 10%. Then, electrospinning was performed on the DMF spinning solution of PVDF-HFP, where an electrospinning voltage was 17 kV, a receiving distance was 15 cm, and an electrospinning time was 24 hours, so as to obtain a PVDF-HFP nanofiber membrane, where a thickness of the PVDF-HFP nanofiber membrane was 60 µm, thereby finally obtaining a composite separator material PP@PVDF-HFP@MOF-5 for the lithium metal battery.

### Embodiment 13

The difference from Embodiment 2 lies in that polyacrylonitrile (having a number average molecular weight of 3×10⁵ g/mol) was adopted to replace PVDF-HFP, thereby finally obtaining a composite separator material PP@PAN@MOF-5 for the lithium metal battery.

### Comparative example 1

This comparative example provides a composite separator for a lithium metal battery, and preparation method thereof includes the following steps.

S1: PVDF-HFP was added to DMF, and the PVDF-HFP was completely and uniformly dissolved through magnetic stirring to obtain a DMF spinning solution of PVDF-HFP, where a mass fraction of the polymer PVDF-HFP was 10%. Then, electrospinning was performed on the DMF spinning solution of PVDF-HFP, where an electrospinning voltage was 17 kV, a receiving distance was 15 cm, and an electrospinning time was 8 hours, so as to obtain a PVDF-HFP nanofiber membrane, and the PVDF-HFP nanofiber membrane was placed in a vacuum oven at 60 °C for drying for later use.

S2: the PVDF-HFP nanofiber membrane obtained in S1 and a PP separator were hot-pressed and composited together through hot roll-pressing treatment at a hot roll-pressing temperature of 70 °C. During the hot roll-pressing, a gap between two rollers was equal to a sum of initial thicknesses of the PP separator and the PVDF-HFP nanofiber membrane minus 3 µm, thereby obtaining a composite separator material PP@PVDF-HFP for the lithium metal battery.

The PP separator adopted in this comparative example was a commercial separator with a model number of Celgard2500.

### Comparative example 2

This comparative example adopted a commercial PP separator material with a model number of Celgard2500.

### Battery preparation

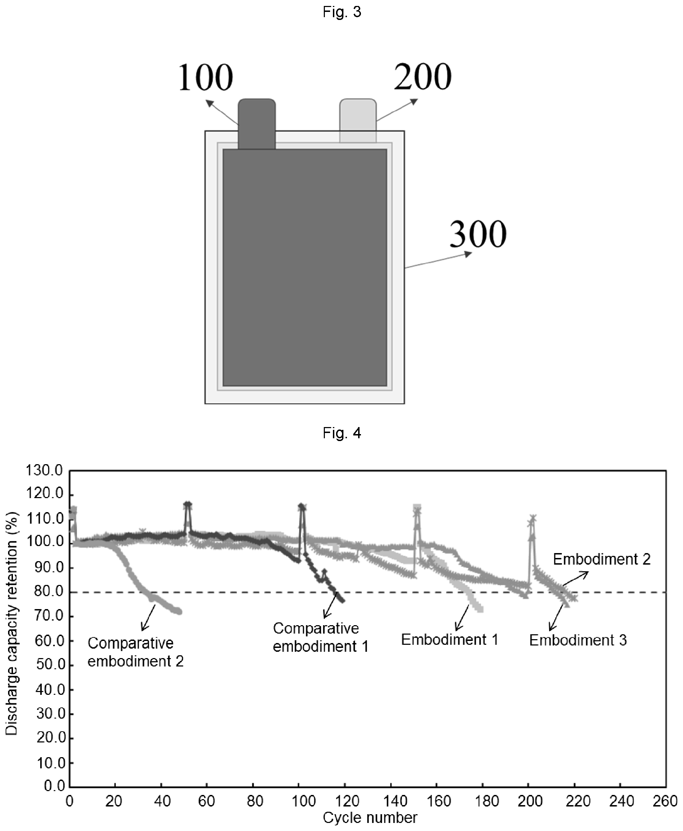

The separator materials in Embodiments 1 to 13 and Comparative Examples 1 to 2 were cut into rectangles with dimensions of length×width=60×50 mm for later use. As shown in Fig. 3, a Li negative electrode 200, a composite separator 300, and a positive electrode 100 were stacked in sequence to assemble lithium metal soft-pack dry cells. After tab welding, electrolyte injection, and packaging were completed, lithium metal negative electrode batteries were prepared.

### Performance testing

Performance tests were conducted on the lithium metal batteries prepared using the separator materials of Embodiments 1 to 13 and Comparative Examples 1 to 2. The initial discharge capacity and a number of cycles when a capacity retention rate reached 80% were tested under conditions of 0.5CC/1.0CD. The test results were shown in Table 1.

**Table 1**

| Embodiment/Comparative example | Initial discharge capacity/(mAh/g) | Number of cycles when the capacity retention rate reaches 80% |
|---|---|---|
| Embodiment 1 | 210.2 | 174 |
| Embodiment 2 | 209.6 | 216 |
| Embodiment 3 | 209.9 | 212 |
| Embodiment 4 | 210.1 | 182 |
| Embodiment 5 | 209.9 | 201 |
| Embodiment 6 | 208.5 | 143 |
| Embodiment 7 | 209.7 | 233 |
| Embodiment 8 | 210.0 | 215 |
| Embodiment 9 | 208.6 | 152 |
| Embodiment 10 | 209.5 | 226 |
| Embodiment 11 | 209.7 | 198 |
| Embodiment 12 | 208.4 | 131 |
| Embodiment 13 | 210.2 | 182 |
| Comparative example 1 | 209.6 | 114 |
| Comparative example 2 | 208.7 | 56 |

As can be seen from the test data in Table 1, compared with the commercial PP separator, the using of the PP@PVDF-HFP material doubles the cycle performance of the lithium metal negative electrode battery. After the in-situ growth of the MOF material on the PP@PVDF-HFP material, its cycle performance was further improved by more than 50%. This indicates that various components of the composite separator exert an effective synergistic effect. The commercial PP separator provides good mechanical strength and flexibility. The PVDF-HFP fiber membrane material prepared by electrospinning has ultra-high porosity, excellent electrolyte wettability, and can retain a large amount of electrolyte. The uniformly arranged metal cations in the in-situ grown MOF material can promote rapid passage of Li⁺ under the principle of repulsion between like charges, possess excellent ionic conductivity, and inhibit reduction of Li⁺ nearby to generate lithium metal and thus uneven growth into lithium dendrites. This demonstrates the excellent performance and application potential in terms of the composite separator material according to the present disclosure in lithium metal batteries.

Fig. 4 is a comparison chart of performance test results of Embodiments 1 to 3 and Comparative Examples 1 to 2 of the present disclosure. As can be seen from the results in Fig. 4, when other conditions of the lithium metal battery are kept the same and only different separator materials are replaced for testing, the cycle life of the PP@PVDF-HFP@ZIF-8 composite separator material prepared in Embodiment 1 in the lithium metal negative electrode battery is 174 cycles @80%; the cycle life of the PP@PVDF-HFP@MOF-5 composite separator material prepared in Embodiment 2 in the lithium metal negative electrode battery is 216 cycles @80%; and the cycle life of the PP@PVDF-HFP@HKUST-1 composite separator material prepared in Embodiment 3 in the lithium metal negative electrode battery is 212 cycles @80%. In contrast, the cycle life of the PP@PVDF-HFP material obtained without in-situ growth of the MOF material in Comparative Example 1 in the lithium metal negative electrode battery is 114 cycles @80%; and the cycle life of the directly used commercial PP separator in the lithium metal negative electrode battery in Comparative Example 2 is only 56 cycles @80%.

The technical features in the above embodiments may be combined arbitrarily. For conciseness of description, not all possible combinations of the technical features in the above embodiments are described. However, as long as there is no contradiction in the combinations of these technical features, they should be considered as falling within the scope recorded in this specification.

The above embodiments only illustrate several implementations of the present disclosure. The descriptions thereof, though relatively specific and detailed, should not be construed as limitations on the scope of the invention patent. It should be pointed out that those skilled in the art may make several modifications and improvements without departing from the concept of the present disclosure, which all fall within the protection scope of the present disclosure. Therefore, the protection scope of the invention patent of the present disclosure shall be subject to the appended claims.

## Claims

1. A composite separator for a lithium metal battery, comprising a separator layer and an NF@MOF membrane layer, wherein the NF@MOF membrane layer is an NF membrane with an in-situ grown MOF material.

2. The composite separator for a lithium metal battery according to claim 1, wherein the separator layer is a polypropylene separator or a polyethylene separator; and/or, the NF membrane is composed of polymer fibers, the MOF material is distributed on surfaces of the polymer fibers, and the MOF material is connected to the polymer fibers through van der Waals forces and/or hydrogen bonds.

3. The composite separator for a lithium metal battery according to claim 2, wherein a diameter of the polymer fibers is 100~1000 nm; and/or, a thickness of the NF membrane is 10~50 µm; and/or, a porosity of the NF membrane is 55%~85%; and/or,
a number average molecular weight of a material of the polymer fibers is 10⁴~10⁷ g/mol; and/or,
the material of the polymer fibers is at least one from polyacrylonitrile, polyvinylidene fluoride, vinylidene fluoride-hexafluoropropylene copolymer, polyimide, and polyvinyl alcohol; and/or,
the MOF material is at least one from ZIF-8, ZIF-67, MOF-5, and HKUST-1.

4. The composite separator for a lithium metal battery according to any one of claims 1 to 3, wherein a mass ratio of the MOF material to the NF membrane is (0.1~10):(90.0~99.9).

5. A preparation method for the composite separator for a lithium metal battery according to any one of claims 1 to 4, comprising the following steps:
S1: a polymer is dissolved in an organic solvent to obtain a spinning solution, and electrospinning is performed on the spinning solution to obtain an NF membrane;
S2: a growth solution of an MOF material is prepared, the NF membrane is immersed in the growth solution, then the NF membrane is taken out, excess growth solution is removed and drying is performed to obtain an NF@MOF membrane; and
S3: the NF@MOF membrane and a separator layer are roll-pressed and composited to obtain the composite separator for a lithium metal battery.

6. The preparation method for the composite separator for a lithium metal battery according to claim 5, wherein in S1, a number average molecular weight of the polymer is 10⁴~10⁷ g/mol; and/or, the polymer is at least one from polyacrylonitrile, polyvinylidene fluoride, vinylidene fluoride-hexafluoropropylene copolymer, polyimide, and polyvinyl alcohol; and/or,
in S1, the organic solvent is at least one from N,N-dimethylformamide, N-methylpyrrolidone, and dimethyl sulfoxide.

7. The preparation method for the composite separator for a lithium metal battery according to claim 5, wherein in S1, a mass fraction of the spinning solution is 0.5%~25%.

8. The preparation method for the composite separator for a lithium metal battery according to claim 5, wherein in S1, process parameters of the electrospinning are: a distance between a spinneret and a receiver is 10~30 cm, an electrospinning voltage is 10~40 KV, an electrospinning time is 4~20 h, an electrospinning environment temperature is 20 °C~30 °C, and a humidity is 40%~70%.

9. The preparation method for the composite separator for a lithium metal battery according to claim 5, wherein in S1, a thickness of the NF membrane is 10~50 µm, a porosity is 55%~85%, and a diameter of polymer fibers is 100~1000 nm.

10. The preparation method for the composite separator for a lithium metal battery according to claim 5, wherein in S2, the MOF material is at least one from ZIF-8, ZIF-67, MOF-5, and HKUST-1; and/or,
in S2, the NF membrane is immersed in the growth solution for 3~24 h, a temperature of the growth solution is 20 °C~200 °C, and the drying is performed in a vacuum oven at 50 °C~100 °C.

11. The preparation method for the composite separator for a lithium metal battery according to claim 5, wherein in S3, the roll-pressing and compositing is hot roll-pressing and compositing utilizing a hot roller at a temperature of 40 °C~80 °C.

12. A lithium metal battery, comprising a lithium negative electrode, a separator, and a positive electrode, wherein the separator is the composite separator for a lithium metal battery according to any one of claims 1 to 4, or prepared by adopting the preparation method for the composite separator for a lithium metal battery according to any one of claims 5 to 11.
